# EUROPEAN PATENT APPLICATION

(11) **EP 0 590 836 A2**
(43) Date of publication of application: **06.04.1994**
(21) Application number: 93307395.9
(22) Date of filing: 20.09.1993
(51) Int. Cl.: E06B 7/23, B65D 90/00, B60J 10/08

(54) **Door seals and arrangements thereof for outwardly opening doors**

(30) Priority: 28.09.1992 ZA 927414
(71) Applicant: TRANSNET LIMITED, Pretoria, Transvaal Province (ZA)
(72) Inventor: Orsmond, Rodney Charles, Pretoria, Transvaal Province (ZA)
(74) Representative: Mayes, Stuart David

(57) **Abstract**

A load carrying enclosure in the form of a transport container (1) or vehicle body is provided in which at least one, and usually more, outwardly opening doors (2, 3), optionally hinged to each other and to the enclosure body, is provided. A sealing strip (5) is provided along the top of the doorways the seal having a deformable region (10) located between a mounting face (6) secured to an upright face of the door frame and a sealing face (8). An upper and outwardly projecting flap (12) is integral with the sealing strip such that it is urged downwardly to sealingly engage the upper edge (15) of door when the deformable region is deformed inwardly. The vertical door edges (20) and bottom (29, 30) of the door have different sealing strips (19, 22) associated therewith.

## Description

**THIS INVENTION** relates to door seals and arrangements thereof for outwardly opening doors, and, more particularly, outwardly opening doors of transport containers (which term includes shipping containers) or enclosed vehicle bodies, whether they be road vehicles or rail vehicles.

In the case of both transport containers and load carrying closed vehicle bodies, there are stringent limitations as to the outer dimensions which the container or body may assume. In the case of transport vehicles, generally the width thereof has the most serious limitation whilst, in the case of transport containers, in particular shipping containers, the width, length and, for that matter, the height, have strict limitations.

In the interests of maximising the internal capacity of such a transport container or vehicle body, it is desired that the door and associated locking arrangement be as thin as possible and that the door, insofar as is possible, protrude to a minimum extent from the outer surface of the external walls of the enclosed vehicle body or transport container. This is so as it is the outer dimension of the door which generally dictates the overall dimension of the body or container. Also, in view of the fact that such vehicle bodies and containers must be capable of travelling through environments which are inherently wet, the seals sealing the doors to the door frame in the closed position must be effective.

Numerous different forms of seals, in particular sealing strips, have been proposed and used in the past for sealing the periphery of a closure to a peripheral frame therefor in the closed condition. In particular, in the application of the sealing of doors of transport containers, numerous different seals have been proposed and used with greater or lesser degrees of success.

One factor which renders difficult the sealing of such a door to its associated peripheral frame is the fact that locking bars, commonly extending up the entire height of such a door so as to be capable of locking the door both top and bottom by the inter-engagement of fittings with anchorage points on the periphery of the opening, have been positioned within the thickness of the door. This renders the doors thinner, in effect, and the locking bars therefore interfere with certain types of seals.

It is the object of this invention to provide door seals and an assembly thereof which will be highly effective in use and which are particularly suitable for use on transport containers or enclosed vehicle bodies of the general type outlined above.

For ease of description, in the general description which follows, the term "load carrying enclosure" will be employed to include both transport containers (including shipping containers) and load carrying bodies of vehicles (both motor and rail vehicles).

In accordance with this invention there is provided a load carrying enclosure having at least one outwardly opening door and wherein, in the closed condition, sealing strips extend around substantially the entire periphery of the door, the invention being characterised in that an upper sealing strip which is resiliently deformable extends along the top of the, or each, door, said upper sealing strip having a rear mounting face, a first integral sealing member extending in a plane roughly parallel to the mounting face and having a first sealing face directed outwardly relative to the mounting face and wherein there is, interposed between the mounting face and first sealing member, a cavity, and an integral sealing flap extending transversely away from the operatively upper end of the first sealing member, the cavity being operative to allow the first sealing member to move towards the mounting face and by so doing to cause the sealing flap to move arcuately downwardly to seal onto an upper edge of a door which is urging the first sealing member towards the mounting face.

Further features of the invention provide for the seal to be an extruded elastomeric seal; for the cavity to be defined by a tubular configuration between the mounting face and first assembly member; for the first sealing face to have a plurality, conveniently two or three, parallel saw-tooth shaped sealing ribs extending along the length thereof; for the flap to be attached to the first sealing member through an obtuse angle; and for an additional cavity in the form of a deep groove to be interposed between the first cavity and the mounting face at a position removed from the plane of the flap.

Still further features of the invention provide for the said upper sealing strip to be permanently mounted to an upright surface of the top of the door frame or surround; for the vertical edges of each door (other than one edge of a door where two doors are to seal relative to each other) to carry a door supported sealing strip for co-operation with a co-operant edge of another door or a door frame (in the case of two doors being hinged together or two doors meeting together) or co-operant door frame or surround; for such seals on the doors to be of a conventional "J" type of sealing strip whereof the one parallel sealing flap is adapted to seal against the inner edge of the vertical peripheries of a or other door doorway and the outer flap is adapted to seal onto the outer surface of such doorway or other door; and for a different and separate lower sealing strip to be interposed between a lower outwardly directed face of the doorframe and the lower edge of the door, such lower sealing strip also having a tubular, deformable cavity having saw-toothed shaped sealing ridges extending along the length thereof.

The invention also provides a shipping container, in particular a side opening shipping container having double-type doors fitted with sealing arrangements as defined above.

In order that the invention may be more fully understood, one embodiment thereof will now be described with reference to the accompanying drawings.

In the drawings:-
- FIG. 1: is a perspective illustration of a shipping container to which the invention is applied;
- FIG. 2: is a cross-section taken through a sealing strip for the top of the doors of the shipping container;
- FIG. 3: is a similar section to Figure 2, but illustrating a join between two lengths of sealing strip as illustrated in Figure 2 should this be required;
- FIG. 4: is a cross-section illustrating the upper edge of a door operatively engaged with a sealing strip of the type illustrated in Figure 2;
- FIG. 5: is a cross-section taken through a conventional sealing strip of the type utilised on the vertical edges of the doors for sealing them relative to the frame and to each other;
- FIG. 6: illustrates the seal of Figure 5 in an operative position between a door and an associated surrounding frame;
- FIG. 7: is a similar view but illustrating the relationship between the sealing strip and two co-operating vertical edges of two doors where they meet;
- FIG. 8: is a cross-section similar to Figure 2 but of a sealing strip utilised on the lower horizontal edge of the periphery of the door frame; and,
- FIG. 9: is a cross-sectional area illustrating the sealing strip of Figure 8 in the operative position.

In this embodiment of the invention a sealing strip according to the invention and an assembly of sealing strips embodying same, is applied to the sealing of doors of a side opening shipping container, generally indicated by numeral 1.

In this case the side opening shipping container has two pairs of doors which extend over substantially the entire side area of the container. Each pair of doors comprises a first door 2 hinged to the vertical corner posts of the container and a second door 3 hinged to the freely movable edge 4 of its associated first door 2.

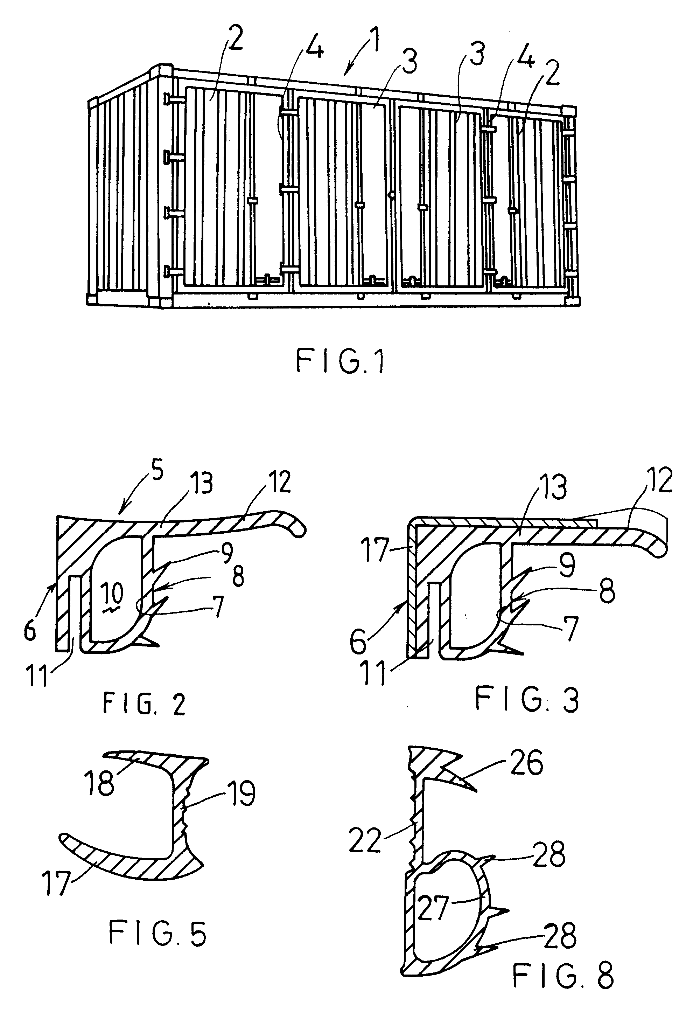

As provided by this invention, the upper edges of all the doors, are sealed to the peripheral door frame by means of a sealing strip 5 (see particularly Figure 2) secured to a vertical face of the surrounding door frame.

As shown most clearly in Figure 2 the seal is made as an elastomeric extrusion and has a somewhat rectangular basic configuration. In the orientation illustrated in Figure 2, the one side face 6 assumes the form of a mounting face and a first sealing member 7 extends substantially parallel thereto, but spaced forwardly of the mounting face. This first sealing member has a first sealing face 8 with saw-toothed shaped sealing formations or ridges 9 extending along the length thereof. A longitudinally extending tubular cavity 10 defines the opposite face of the first sealing member 7, the cavity 10 being interposed between the mounting face and the first sealing member. Interposed between the cavity 10 and the mounting face 6 is a deep groove 11 extending upwardly from a lower region, the purpose of which will become apparent from the following.

Formed integrally with the sealing strip described is a flap 12 which extends outwardly from the operatively upper end of the first sealing face and transversely thereto at almost right angles. The zone 13 connecting the flap 12 and first sealing member 7 is somewhat thickened. The flap extends slightly upwardly at an incline so that the angle between the flap and first sealing face is somewhat obtuse.

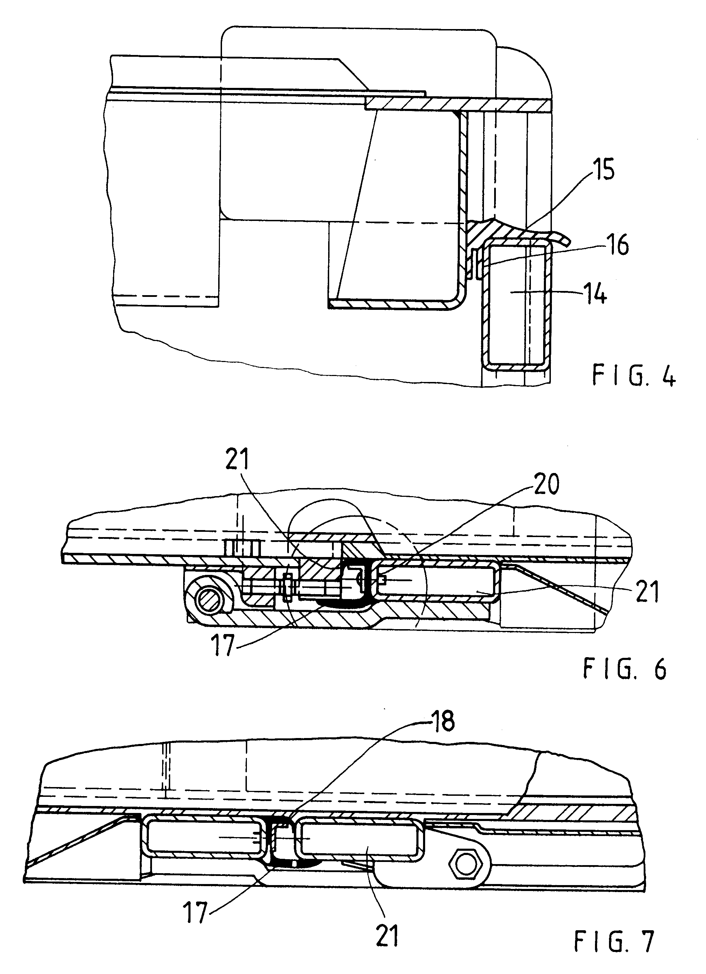

The arrangement described above is such that the basically rectangular or tubular portion of the seal can be interposed between a door frame and door 14 (see Figure 4) such that the first sealing face 8 is engaged by the inner surface of the door. Thus the basically rectangular shaped portion of the seal will be substantially compressed so that the cavity 10 and deep groove 11 are, to a substantial extent, squashed flat. During this process the flap 12 tends to rotate downwardly towards the sealing face 8 and, accordingly, engages the outer peripheral edge 15 of the door to seal firmly over and against same. In this manner an effective seal is achieved on the outer upper periphery of the doors as well as on the inner upper periphery of the inner face 16 of the door.

A seal installation of the type described above may be required to have a join between two adjacent ends of sealing strip. This is achieved, generally at the join of two doors or the like, by way of a metal securing plate 17 which is right angled and secured to both the mounting face 6 and the outer and upper face of the flap 12 for an appreciable part of its length. The elastomeric sealing strip is bonded to the metal plate and any gap between the two abutting ends is filled with silicone rubber sealant. In this manner an effective joint between the two ends of the sealing strip may achieved.

Also, at positions where locking rods extend upwardly out of the edge of a door the flap is simply cut away to neatly accommodate it.

The vertical edges of the doors are all sealed one to the other by means of a conventional "J" shaped sealing strip in cross-section such as that illustrated in Figure 5. In this known type of sealing strip an elastomeric extrusion has a somewhat longer outer sealing flap 17 and a somewhat shorter one 18 interconnected by a bridging web 19 which is secured to the edge 20 of a door as illustrated clearly in Figure 6.

As illustrated in Figure 6, the shorter inner sealing flap 18 engages the inner periphery of the door frame as illustrated at 21 whilst the outer longer sealing flap 17 engages the outer surface of the surrounding face to the periphery.

In the case of two doors joining each other the same situation applies as shown in Figure 7.

In each case the web 19 is pop riveted or otherwise secured to a tubular peripheral frame member 21 of the door.

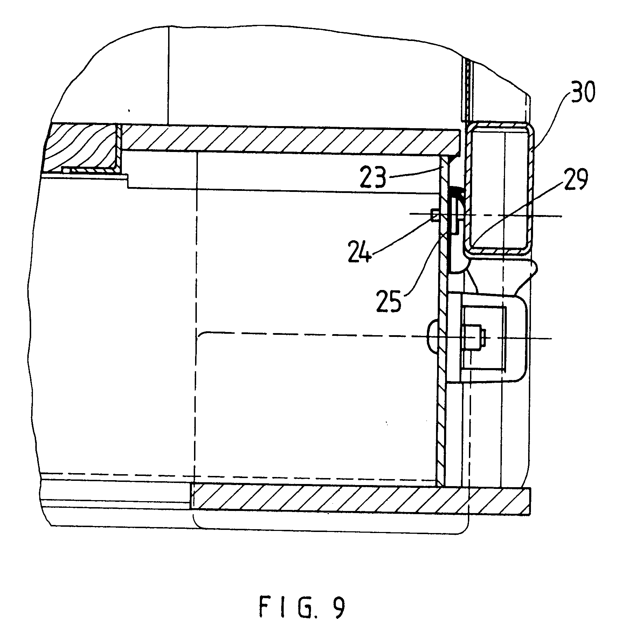

In order to complete the sealing of the entire periphery of the door, there is provided a sealing strip of the type illustrated in Figure 8 and which comprises an operatively vertical planar strip 22 for bonding to the vertical face 23 of the door frame as shown in Figure 9. Such securing can be conveniently effected by pop rivets 24 passing through the sealing strip 22 and a clamping plate 25.

The sealing strip has a pair of sealing flaps 26 at its upper edge and a tubular, deformable sealing formation 27 at its lower region. The latter has a plurality, in this case three, saw-toothed shaped sealing ridges 28. The tubular formation 27 is located such that it is approximately opposite a lower corner 29 of the door frame 30.

It will be understood that the arrangements of seals described above provide an effective peripheral seal wherein the flap 12 of the upper seal covers the upper ends of the vertical seals attached to the edges of the doors and the lower edge is sealed by a particular sealing strip fixed to the door frame.

Many variations may be made to the embodiment of the invention described above without departing from the scope hereof which is limited only to the provision of the separate sealing strip of the nature defined along the upper edge of the doors coupled with separate and generally different sealing strips extending up the height of the doors, and generally attached to the doors rather than the door frame and the lower seal usually, but not necessarily, attached to the door frame and not the doors.

## Claims

1. A load carrying enclosure (1) having at least one outwardly opening door (2,3) and wherein, in the closed condition, sealing strips (5, 19, 22) extend around substantially the entire periphery of the door, the invention being characterised in that an upper sealing strip (5) which is resiliently deformable extends along the top of the, or each, doorway, said upper sealing strip having a rear mounting face (6), a first integral sealing member (7) extending in a plane roughly parallel to the mounting face and having a first sealing face (8) directed outwardly relative to the mounting face and wherein there is, interposed between the mounting face and first sealing member, a cavity (10, 11), and an integral sealing flap (12) extending transversely away from the operatively upper end of the first sealing face, the cavity being operative to allow the first sealing face to move towards the mounting face and by so doing to cause the sealing flap to move arcuately downwardly to seal onto an upper edge (15) of a door which is urging the first sealing member towards the mounting face.

2. A load carrying enclosure as claimed in claim in claim 1 in which said upper sealing strip is an extruded elastomeric sealing strip.

3. A load carrying enclosure as claimed in either of claims 1 or 2 in which the said cavity is defined by a tubular configuration (10) between the mounting face and first sealing member.

4. A load carrying enclosure as claimed in any one of the preceding claims in which the-first sealing face has a plurality of parallel saw-tooth shaped sealing ribs (9) extending along the length thereof.

5. A load carrying enclosure as claimed in any one of the preceding claims in which the flap is attached to the first sealing member through an obtuse angle.

6. A load carrying enclosure as claimed in any one of the preceding claims in which an additional cavity in the form of a deep groove (11) extending in a direction generally parallel to the mounting face is interposed between the first cavity and the mounting face.

7. A load carrying enclosure as claimed in any one of the preceding claims in which the said upper sealing strip is permanently mounted to an upright surface of the top of the door frame or surround.

8. A load carrying enclosure as claimed in any one of the preceding claims in which the vertical edges of each door (other than an edge of a door adapted to seal against another door edge having a sealing strip) carries a door supported sealing strip for co-operation with a co-operant edge of another door or a door frame or surround as the case may be.

9. A load carrying enclosure as claimed in claim 8 in which the door supported sealing strips are of a conventional "J" type whereof a smaller sealing flap (18) is adapted to seal against the inner edge (21) of the vertical periphery of a doorway or other door and the larger outer flap (17) is adapted to seal onto the outer surface of such doorway or other door.

10. A load carrying enclosure as claimed in any one of the preceding claims in which a different and separate lower sealing strip (22) is interposed between a lower outwardly directed face (23) of the door frame at the lower edge (29, 30) of the door.

11. A load carrying enclosure as claimed in claim 10 in which the lower sealing strip has a deformable cavity (27) with saw-tooth shaped sealing ridges (28) extending along the length thereof.

12. A load carrying enclosure as claimed in any one of the preceding claims in which the enclosure assumes the form of a shipping container.
